# EUROPEAN PATENT SPECIFICATION

(11) **EP 1 750 259 B1**
(45) Date of publication and mention of the grant of the patent: **18.11.2009**
(21) Application number: 05026867.1
(22) Date of filing: 08.12.2005
(51) Int. Cl.: G11B 7/0045

(54) **Optical recording medium**
Optisches Aufzeichnungsmedium
Support d'enregistrement optique

(30) Priority: 05.08.2005 KR 2005071834
(43) Date of publication of application: 07.02.2007
(73) Proprietor: LG Electronics Inc., Yongdungpo-Gu Seoul 150-010 (KR)
(72) Inventor: Lee, Kwang Lyul, Seoul 135-120 (KR)
(74) Representative: von Hellfeld, Axel

(56) References cited:
- EP-A- 0 828 245
- EP-A- 1 300 836

## Description

### BACKGROUND OF THE INVENTION

### 1. Field of the Invention

The present invention relates to an optical recording medium. In particular, the present invention relates to a recordable optical recording medium consisting of three recording layers.

### 2. Description of the Related Art

With the advent of multimedia age comprehensively dealing with video signal including moving picture and stop picture, audio signal, and computer data information, package media including all kinds of discs like CD and DVD have been widely used. Recently, there have been active efforts to apply an optical recording medium to the recording media of mobile phone, digital camera, broadcasting, and movie.

The optical recording medium is divided into read-only memory (ROM) optical recording medium, recordable optical recording medium capable of recording information only once, and rewritable optical recording medium capable of writing, reading, and deleting information repeatedly.

The recordable optical recording medium can be applied for data backup or storage of broadcasting, movie, etc. As recording layer material of the recordable optical recording medium, organic material like dye or inorganic material may be used. Only, in case of using the organic material as the recording layer material, a problem may be occurred in long term storage of data recorded in the optical recording medium.

As recording mechanisms of the recordable optical recording medium, a) a pit is generated when the recording layer material is burned, b) a pit is formed from expansion of the volume as the recording layer material is decomposed, c) a new phase is formed by solidifing after the recording layer is melted, and d) a new material (for example, silicide, germanium compound, or antimony compound) is formed by reaction on the contact surface with foreign material.

Also, these mechanisms may be occurred multiply. In case the recording mark is generated by multiple mechanisms, if a laser beam is irradiated onto the optical recording medium, first material and second material in the recording layer may be mixed and changed to form different material from the recording layer.

In this case, data are recorded by optical property changed in the recording layer material, and the recorded data can be identified by change of reflectivity according to the changed optical property before and after recording.

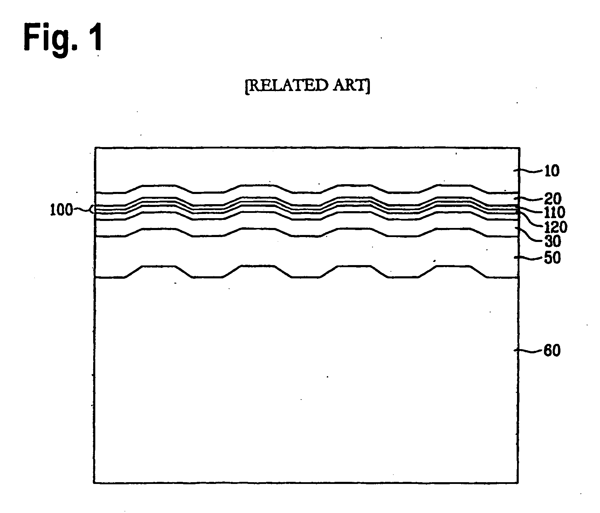

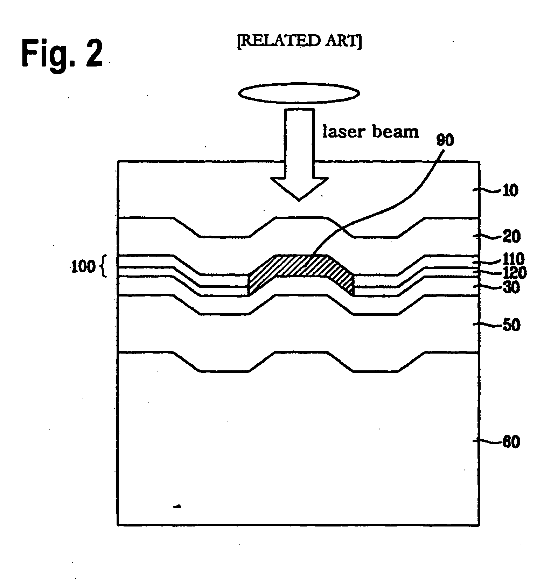

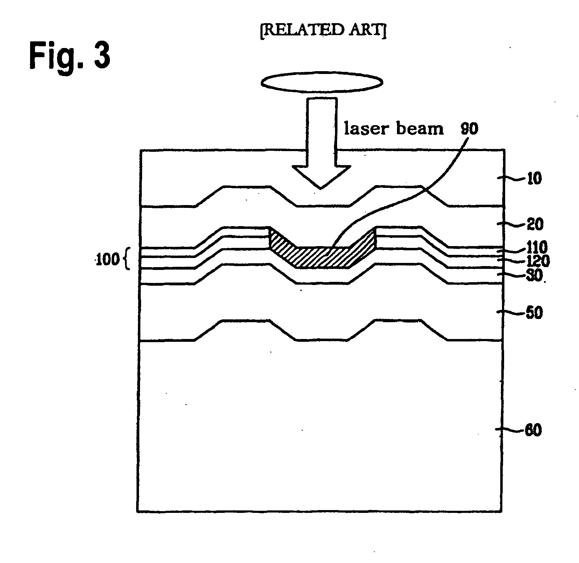

FIG. 1 is a sectional view illustrating the structure of a conventional optical recording medium. FIG. 2 is a sectional view illustrating one form of generated record mark in case of performing land recording to the optical recording medium of FIG. 1. And, FIG. 3 is a sectional view illustrating one form of generated record mark in case of performing groove recording to the optical recording medium of FIG. 1.

In FIG 1, the optical recording medium includes a substrate 60, a reflective layer 50, an information recording layer 100, an optical transmittance layer 10, and a dielectric layer 20, 30.

The substrate 60 plays a role to support physical form of the optical recording medium. As material of the substrate 60, ceramic, glass, resin, etc. are generally used, but polycarbonate resin is preferable.

The reflective layer 50 is deposited on the substrate 60, reflects laser beam incident to the optical recording medium through the optical transmittance layer 10, and sends back the beam to the direction of the optical transmittance layer 10. Therefore, it is desirable that the optical transmittance layer 10 contains a material having high reflectivity or alloy to which highly reflective material is added.

The information recording layer 100 is deposited on the reflective layer 50, and includes a first recording layer 110 and a second recording layer 120.

Each material contained in the first recording layer 110 and the second recording layer 120 forms a new material in mixture when the laser beam is irradiated thereon. The new material has totally different reflectivity from other materials around.

When the laser beam is irradiated, the materials of the first recording layer 110 and the second recording layer 120 make a recording mark in the mechanism that they react at the contact surface to form a new material.

Also, the dielectric layer 20, 30 is laminated on at least one side of the information recording layer 100.

In FIG. 2 and FIG. 3, the form of recording in an optical recording medium is explained in case of recording information by irradiating the laser beam to the optical recording medium.

Groove and land are formed on the surface of the information recording layer 100, and guide the laser beam irradiated onto the optical recording medium.

Land recording means that data are recorded onto the convex part of the information recording layer 100 as shown in FIG. 2, and recording mark 90 is formed on the part that the laser beam first arrives at in the surface of the information recording layer 100.

Groove recording means that data are recorded onto the concave part of the information recording layer 100 as shown in FIG. 3, and recording mark 90 is formed on the part that the laser beam later arrives at in the surface of the information recording layer 100.

Therefore, both land recording and groove recording are possible in the optical recording medium.

The optical recording medium in consisted of four or five layers like reflective layer 50, information recording layer 100, optical transmittance layer 10, and dielectric layer 20, 30. Thus, the optical recording medium is thick, and the manufacturing cost is increased. Especially, the reflective layer 50 contains very expensive substance like AgPdCu or AgNdCu, and its thickness is about 700Å to 1000Å. Therefore, the manufacturing cost of the optical recording medium is increased, and the thickness of the optical recording medium is thicker due to the reflective layer 50.

On the other hand, the recording medium for next generation requires very high recording density and transmittance velocity for data. The size of recording mark of the optical recording medium should be smaller than the present size to increase the recording density recorded in the optical recording medium. Thus, a laser wavelength irradiated onto the optical recording medium should be reduced to 450nm or less, and numerical aperture should be increased to 0.7 or more. Also, the data transmittance velocity should be much higher than the present one of between 30Mbps and 35Mbps.

In case of BD (Blu-ray Disc) that is one recording medium for next generation, the recording layer material having characteristic of jitter acceptable within the ranges of recording linear velocity of between 5.28m/s and 10.56m/s and a laser power of between 3mW and 7mW at 405nm wavelength should be included in the optical recording medium.

Particularly, the recordable optical recording medium having the above characteristic requires combination of the recording layer material in which □) the contrast between recording mark and space in the optical recording medium should be high, □) the recording sensibility should be high, □) the recorded mark should be stable, □) the recording characteristics including noise and jitter of the recording mark should be satisfied in BD system.

Also, in case the recording mark 90 is made inside the optical recording medium by irradiated laser, combination of the recording layer material is required to prevent the laser power used for making the recording mark 90 from getting too high

The document EP 828 245 discloses a phase-change type optical recording medium. The phase-change type optical recording medium records information by utilizing a transition between a crystal phase and an amorphous phase or a transition between a crystal phase and another crystal phase.

The document EP 1300 836 relates to phase-change material systems. The recording layers of the material system are kept separated by providing additional interface layers inhibiting a diffusion of the elements of the recording layers.

### SUMMARY OF THE INVENTION

An object of the present invention is to provide an optical recording medium in which the information layer can be consisted of three recording layers, the thickness can be reduced by eliminating a reflective layer and a dielectric layer, and the manufacturing cost can be saved.

Another object of the present invention is to provide an optical recording medium that has high recording sensibility and big contrast between recording mark and space as well as satisfies characteristic of BD.

Another object of the present invention is to provide an optical recording medium that has superior stability of recording mark and superior recording characteristic of jitter as well as satisfies characteristic of BD

Another object of the present invention is to provide an optical recording medium in which the laser power necessary for making recording mark is low.

The above objects are met by the use of a recordable optical recording medium according to the independent claims.

Further embodiments of the present invention are given in the dependent claims.

The optical recording medium according to one embodiment of the present invention includes a substrate and an information recording layer located on the substrate. The information recording layer includes a first recording layer containing at least one element selected from the group consisting of Ag, In, Ge, Sb and Te, a second recording layer containing at least one element selected from the group consisting of Si, Sn, Sb and Ge, and a third recording layer containing at least one element selected form the group consisting of Ni, Ag, Au, W, Cr and Mo.

The optical recording medium according to another embodiment of the present invention includes a substrate, at least two information recording layers located on the substrate and a separation layer formed between the information recording layers. The information recording layers includes a first recording layer containing at least one element selected from the group consisting of Ag, In, Ge, Sb and Te, a second recording layer containing at least one element selected from the group consisting of Si, Sn, Sb and Ge, and a third recording layer containing at least one element selected form the group consisting of Ni, Ag, Au, W, Cr and Mo.

As described above, in the optical recording medium of the present invention, the information layer can be consisted of three recording layers, the thickness can be reduced by eliminating a reflective layer and a dielectric layer, and the manufacturing cost can be reduced.

Also, the optical recording medium of the present invention may provide high recording sensibility and contrast between recording mark and space as well as record data in high density.

Moreover, in the optical recording medium of the present invention, low laser power may be enough to make recording mark.

Further, the optical recording medium of the present invention may provide very stable recording mark and superior recording characteristic.

### BRIEF DESCRIPTION OF THE DRAWINGS

The above and other features and advantages of the present invention will become readily apparent by reference to the following detailed description when considered in conjunction with the accompanying drawings wherein:
FIG. 1 is a sectional view illustrating the structure of a conventional optical recording medium;
FIG. 2 is a sectional view illustrating one form of generated record mark in case of land recording to the optical recording medium of FIG. 1;
FIG. 3 is a sectional view illustrating one form of generated record mark in case of groove recording to the optical recording medium of FIG. 1;
FIG. 4 is a sectional view illustrating the structure of the optical recording medium according to a first embodiment of the present invention;
FIG. 5 is a sectional view illustrating one form of generated record mark in case of land recording to the optical recording medium of FIG. 4;
FIG. 6 is a sectional view illustrating one form of generated record mark in case of groove recording to the optical recording medium of FIG. 4;
FIG. 7 is a sectional view illustrating one form of generated record mark in case of land recording to the optical recording medium according to a second embodiment of the present invention;
FIG. 8 is a sectional view illustrating one form of generated record mark in case of groove recording to the optical recording medium according to a second embodiment of the present invention;
FIG. 9 is a sectional view illustrating the structure of the optical recording medium according to a third embodiment of the present invention;
FIG. 10A and FIG. 10B are views illustrating results of reflectivity before and after recording according to the optical recording mediums consisted of five recording layers and two recording layers;
FIG. 11A and FIG. 11B are views illustrating horizontal temperature distribution after recording of the recording layer containing Ge in the test results of FIG. 10A and FIG. 10B;
FIG. 12A and FIG. 12B are views illustrating vertical temperature distribution after recording of the recording layer containing Ge in the test results of FIG. 10A and FIG. 10B;
FIG. 13 is a view illustrating result of reflectivity change of the optical recording medium according to one embodiment of the present invention in case combination of thickness of the third recording layer and the dielectric layer is changed;
FIG. 14 is a view illustrating laser recording pulse waveform used for data recording of the optical recording medium for performance evaluation of the optical recording medium according to one embodiment of the present invention;
FIG. 15 is a view illustrating temperature distribution of the optical recording medium according to recording time in case of recording in the recording pulse of FIG. 14;
FIG. 16 is a view illustrating temperature distribution depending on presence of the dielectric layer in the optical recording medium according to one embodiment of the present invention.

### DESCRIPTION OF EMBODIMENTS

Hereinafter, the preferred embodiments of the present invention will be explained in more detail with reference to the accompanying drawings.

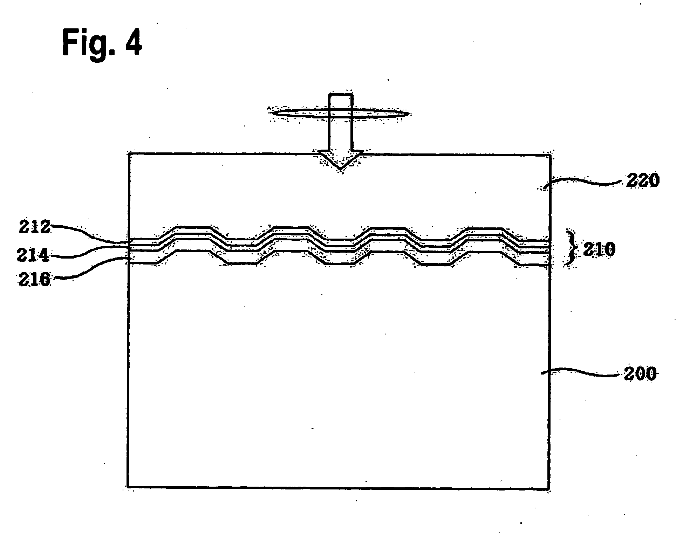

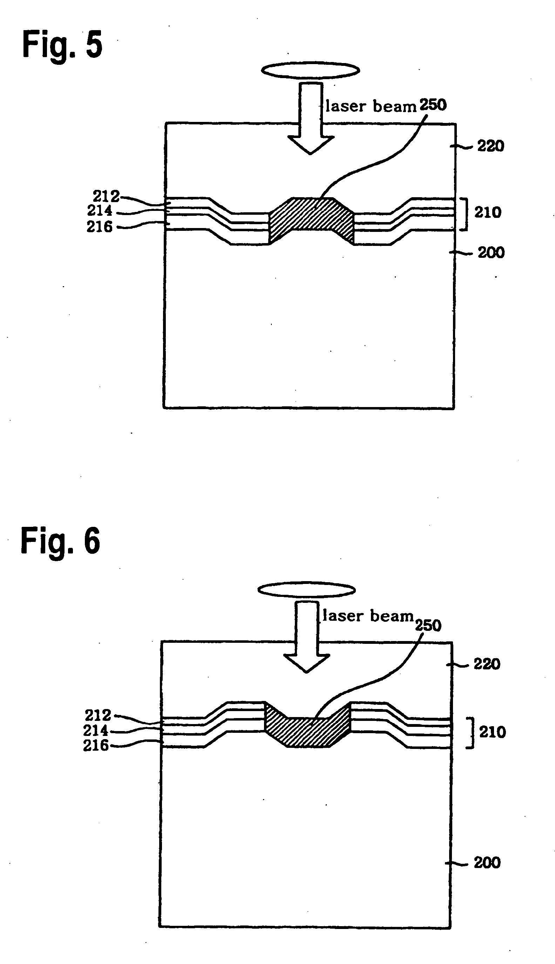

FIG. 4 is a sectional view illustrating the structure of the optical recording medium according to a first embodiment of the present invention. FIG. 5 is a sectional view illustrating one form of generated record mark in case of land recording to the optical recording medium of FIG. 4. And, FIG. 6 is a sectional view illustrating one form of generated record mark in case of groove recording to the optical recording medium of FIG. 4.

In FIG 4, the optical recording medium of the present invention includes a substrate 200, an information recording layer 210, and an optical transmittance layer 220.

The substrate 200 plays a role to support physical form of the optical recording medium.
As material of the substrate 200, ceramic, glass, resin, etc. are generally used, and polycarbonate resin is preferable.

The optical transmittance layer 220 contains a material having high reflectivity or alloy to which highly reflective material is added. A laser beam is incident to the optical recording medium through the optical transmittance layer 220, and sends back the beam to the direction of the optical transmittance layer 220.

The information recording layer 210 is deposited on the substrate 200, and includes a first recording layer 212, a second recording layer 214 and a third recording layer 216.

Each material contained in the first recording layer 212, the second recording layer 214, and the third recording layer 216 forms a new material in mixture when the laser beam is irradiated thereon. The new material has totally different reflectivity from other materials around.

The positions of the first recording layer 212, the second recording layer 214 and the third recording layer 216 in the information recording layer 210 of FIG. 4 may be changed each other. That is, it is not necessary that the first recording layer 212, the second recording layer 214 and the third recording layer 216 are disposed in sequence.

The first recording layer 212 contains at least one element selected from the group consisting of Ag, In, Ge, Sb and Te, preferably in the form of A_{W}(Sb_{Z}Te_{1-Z})_{1-W}(0 ≤W≤0.2, 0.5≤Z≤0.9), wherein A is one element selected from a first group consisting of Ge, Sn, Si, Cu, Au, Ag, Pd, V, Bi, Zr, Ti, Mn and Mo.

The second recording layer 214 desirably contains at least one element selected from the group consisting of Si, Sn, Sb and Ge. It is also desirable that the second recording layer 214 contains one element selected from the group consisting of Si, Sn, Sb and Ge as main element in 50 atomic percents (atomic %) or more.

The third recording layer 216 desirably contains at least one element selected from the group consisting of Ni, Ag, Au, W, Cr and Mo.

When the laser beam is irradiated, the materials of the first recording layer 212, the second recording layer 214 and the third recording layer 216 make a recording mark in the mechanism that they react at the contact surface to form a new material.

FIG. 5 and FIG. 6 illustrate forms recorded to the optical recording medium in case of recording information by irradiating laser beam to the optical recording medium according to the first embodiment of the present invention.

Groove and land are formed on the surface of the information recording layer 210, and guide the laser beam irradiated onto the optical recording medium.

Land recording means that date are recorded onto the convex part of the information recording layer 210 as shown in FIG. 5, and recording mark 250 is formed on the part that the laser beam first arrives at in the surface of the information recording layer 210.

Groove recording means that date are recorded onto the concave part of the information recording layer 210 as shown in FIG. 6, and recording mark 250 is formed on the part that the laser beam later arrives at in the surface of the information recording layer 210.

Therefore, both land recording and groove recording are possible in the optical recording medium according to the present invention.

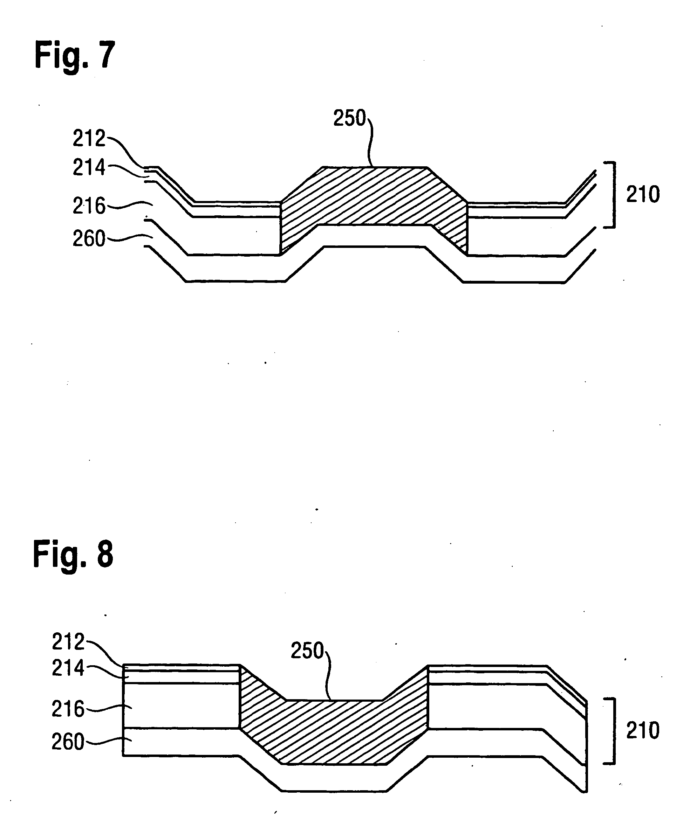

FIG. 7 is a sectional view illustrating one form of generated record mark in case of land recording to the optical recording medium according to a second embodiment of the present invention. And, FIG. 8 is a sectional view illustrating one form of generated record mark in case of groove recording to the optical recording medium according to a second embodiment of the present invention.

In FIG. 7 and FIG. 8, the dielectric layer 260 may be laminated around or inside the information recording layer 210 in the optical recording medium according to the second embodiment of the present invention

In case the dielectric layer 260 does not exist, the temperature may rise a little at same recording power because the transmittance rate is high and the absorption rate is low at the time of irradiating the laser beam.

It is desirable that the dielectric layer 260 contains at least one element selected from the group consisting of AIN, GeN, SiN, Al₂O₃, ZnS-SiO₂, TiO and SiO₂.

The elements added to the dielectric layer 260 has good absorption, and so the transmittance rate of laser beam is decreased at the time of irradiating the laser beam. Thus, in case the dielectric layer 260 is laminated, the laser power necessary at the time of generating the recording mark 250 may be lowered.

Also, in case the laser beam is irradiated to the information recording layer 210, the dielectric layer 260 regulates temperature distribution of the information recording layer 210 by emitting heat generated in the information recording layer 210 in proper rate.

The dielectric layer 260 may be disposed on at least one side of the information recording layer 210 or inside the information recording layer 210.

The other constitution is the same as the optical recording medium according to the first embodiment.

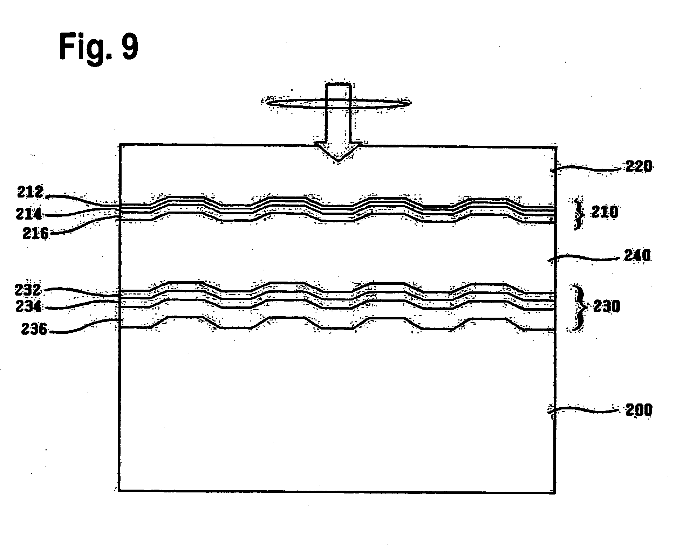

FIG. 9 is a sectional view illustrating the structure of the optical recording medium according to a third embodiment of the present invention.

In FIG. 9, the optical recording medium according to the third embodiment of the present invention includes a substrate 200, a separation layer 240 located between two and more information recording layers 210, 230 and each information recording layer 210, 230, and the optical transmittance layer 220.

Recording mark 250 may be formed in the information recording layers 210, 230 as described FIG. 5 to FIG. 8.

The information recording layers 210, 230 need not have the same structure. Thus, the dielectric layer 260 may be further included in only one of the information recording layers 210, 230.

Hereinafter, applicability of the optical recording medium of the present invention will be described, comparing reflectivity and heat distribution between optical recording medium consisting of five layers (hereinafter, referred to as "optical recording medium of five layers") and optical recording medium consisting of two layers (hereinafter, referred to as "optical recording medium of two layers").

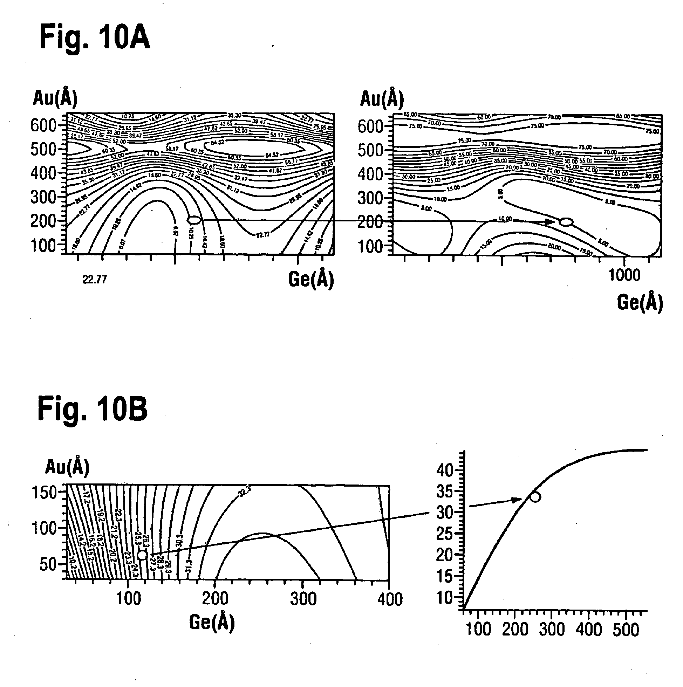

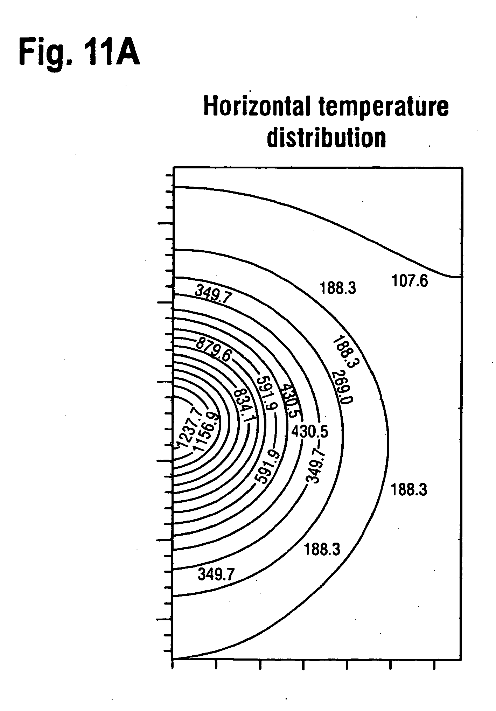

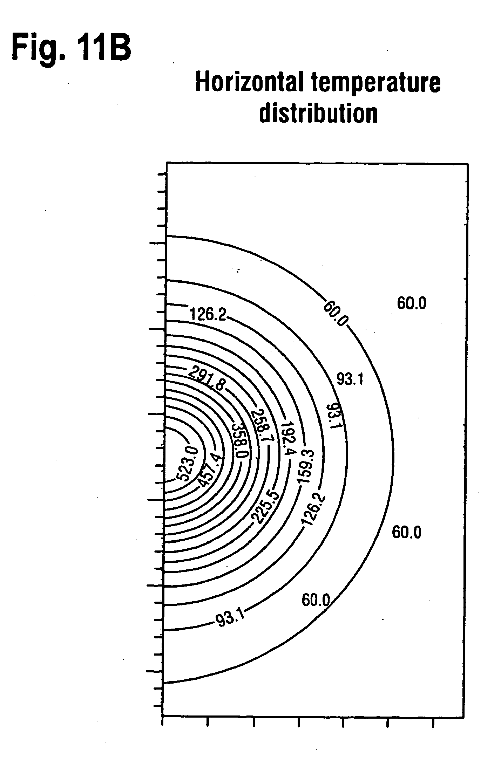

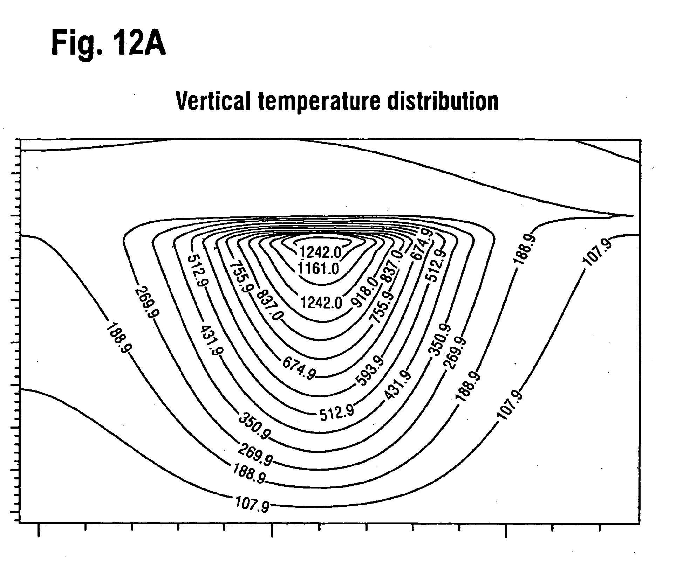

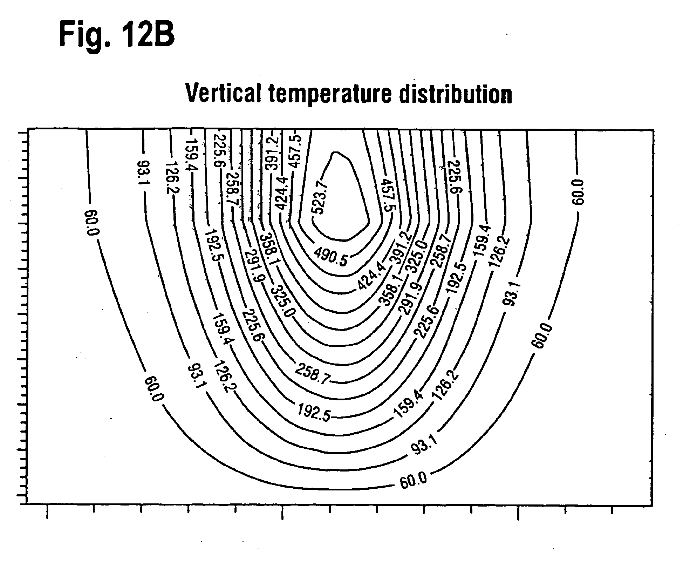

FIG. 10A and FIG. 10B are views illustrating results of reflectivity before and after recording information according to the optical recording medium of five recording layers and that of two layers. FIG. 11A and FIG. 11B are views illustrating horizontal temperature distribution after recording the recording layer containing Ge in the test result of FIG. 10A and FIG. 10B. And, FIG. 12A and FIG. 12B are views illustrating vertical temperature distribution after recording the recording layer containing Ge in the test results of FIG. 10A and FIG. 10B.

The optical recording medium of five layers includes the reflective layer 50 and the dielectric layers 20, 30 besides the two recording layers 110, 120, like the other optical recording medium described above.

The optical recording medium of two layers consists of two information recording layers.

The optical recording mediums of five layers and two layers include information recording layers containing Ge and Au.

In FIG. 10A and FIG. 10B, the optical recording medium of two layers indicates satisfactory reflectivity difference before and after recording.

In FIG. 11A and FIG. 11B showing the horizontal temperature distribution of the recording layer containing Ge, temperature is concentrated at the laser center in the optical recording medium of two layers, but diffused relatively widely to front and rear, and right and left in the optical recording medium of five layers. In case the optical recording medium of five layers, thermal interference may be occurred among recording marks, and so the optical recording medium of two layers is better in terms of mark control.

Only, in the optical recording medium of two layers, temperature is less increased at same recording power because there is no thick layer at the time of irradiating the laser, and so the transmittance rate can be high and the absorption rate can be low. This can be complemented by coating the dielectric layer 260.

Referring to FIG. 12A and FIG. 12B showing the horizontal temperature distribution of the recording layer containing Ge, temperature is concentrated at the laser center, and heat loss to right and left is less, and thus mark control is more effective, in the optical recording medium of two layers. In case of the optical recording medium of five layers, more heat is exited to front and rear, and right and left since the thick reflective layer 50 has big thermal conductivity, and so transformation of the substrate by heat may be reduced. On the other hand, temperature is concentrated in the optical recording medium of two layers to cause transformation by heat. This can be complemented by coating the dielectric layer 260.

Therefore, the optical recording medium of two layers has satisfactory properties in reflectivity and heat.

Hereinafter, test results to the optical recording medium according to the first to third embodiments will be described.

First, the structure and recording layer material of the optical recording media used for the tests will be described.

The optical recording media used in the tests include a substrate 200 of a doughnut form of 15mm of internal diameter, 120mm of external diameter, and 1.1mm of thickness, and 0.32µm of track pitch having land and groove is formed on the substrate 200.

The substrate 200 is made of polycarbonate, and multiple thin layers are laminated on the substrate 200 in the order of the third recording layer 216, the dielectric layer 260 consisted of ZnS-SiO₂, the second recording layer 214, and the first recording layer 212.

Also, the optical transmittance layer 220 is adhered by a polycarbonate cover sheet of 80µm with PSA glue of 20µm onto the first recording layer 212. In the lamination, the thickness of the dielectric layer 260 is 200Å, that of the third recording layer 216 is 300Å, that of the second recording layer 214 is 30Å, and that of the first recording layer 212 is 90Å.

The conditions of the above tests according to the first to third embodiments of the present invention are described below.

In the tests, the constant linear velocity of the optical recording media is 5.28m/s, and the measuring position of the optical recording media was 30mm from the inner circumference. The data recording to the optical recording medium was groove recording, the wavelength of laser beam used therein is 408nm, and the reproduction power is set at 35mW. Also, as test apparatus, ODU-1000 of Pulstec Co., Ltd was used.

In Table 1, combination of materials of the information recording layer 210 and the dielectric layer 260 in the optical recording medium as shown above and test results thereof are explained below.

**[Table 1]**

| Test NO. | The first recording layer | The second recordinglayer | The third recording layer | The dielectric layer | 8T modulation (I8ₚₚ/I8H) (%) | determination | Start DC test power (mW) | determination | Mark stability determination |
|---|---|---|---|---|---|---|---|---|---|
| 1 | GeSbTe | Si | Ag | ZnS-SiO₂ | 45 | ○ | 3.0 | Δ | ○ |
| 2 | GeSbTe | Ge | Ag | ZnS-SiO2 | 40 | Δ | 1.8 | ○ | Δ |
| 3 | GeSbTe | Sb | Ag | | 50 | ○ | 1.5 | ○ | Δ |
| 4 | GeSbTe | Sn | Ag | | 50 | ○ | 2.7 | Δ | ○ |
| 5 | AgInSbTe | Si | Au | ZnS-SiO₂ | 55 | ○ | 1.0 | ○ | Δ |
| 6 | AgInSbTe | Ge | Au | ZnS-SiO2 | 52 | ○ | 1.4 | ○ | Δ |
| 7 | AgInSbTe | Sb | Au | | 38 | Δ | 2.0 | ○ | ○ |
| 8 | AgInSbTe | Sn | Au | | 40 | Δ | 4.0 | × | Δ |
| 9 | GeSbTe | Si | Cr | | 54 | ○ | 3.5 | Δ | ○ |
| 10 | GeSbTe | Si | W | | 50 | ○ | 4.0 | × | ○ |
| 11 | GeSbTe | Si | Ni | | 40 | Δ | 4.0 | × | ○ |
| 12 | GeSbTe | Sb | Mo | | 40 | Δ | 3.0 | Δ | ○ |

The first recording layer 212, the second recording layer 214 and the third recording layer 216 were consisted of GeSbTe, Si and Ag, respectively, as main element in Test 1; GeSbTe, Ge and Ag in Test 2; GeSbTe, Sb and Ag in Test 3; GeSbTe, Sn and Ag in Test 4; AgInSbTe, Si and Au in Test 5; AgInSbTe, Ge and Au in Test 6; AgInSbTe, Sb and Au in Test 7; AgInSbTe, Sn and Au in Test 8; GeSbTe, Si and Cr in Test 9; GeSbTe, Si and W in Test 10; GeSbTe, Si and Ni in Test 11; and GeSbTe, Sb and Mo in Test 12.

The test standards according to each test combination are difference of reflectivity of the optical recording medium according to 8T modulation, start DC test power, and mark stability. The results according to each standard of Table 1 are marked as 'o' '□' or 'X' in the right column of each test standard (own column for mark stability) in the order of test combination showing favorable result.

First, 8T modulation indicates difference of reflectivity between space and mark.

That is, the difference (I8pp) between minimum reflectivity value and maximum reflectivity value to the 8T modulation pulse of the laser beam divided by maximum reflectivity value (I8H) is expressed in percent (%). In the 8T modulation test of laser beam, the difference of reflectivity is the first standard of the optical recording medium. Thus, as its difference of reflectivity is bigger, the optical recording medium is determined more appropriate.

In the test to the optical recording medium according to the present invention, the difference of reflectivity between space and mark of Test 5 was the best as 55%.

Start DC test power is a determination standard that can indirectly confirm whether the optical recording medium having optimized structure can be recorded as prescribed recording power (Pw).

BD should generate the recording mark 250 at the laser recording power within the range of less than 7mW to 1X, 2X velocity of the optical recording medium. For indirect confirmation thereof, by measuring power that any change in the information recording layer 210 begins, if the measured power is between 1.5mW and 2.5mW, the optical recording medium is determined to have proper recording sensibility to the prescribed laser power.

Hereinafter, a specific method of measuring start DC test power as determination standard will be described.

First, laser beam of space power (Ps(mW)) is irradiated to the optical recording medium. Pulse of the laser beam is single pulse type, not multiple pulse type. And, in case the laser beam is irradiated, the original size of reflectivity of the optical recording medium is measured as laser power to initiate change in the oscilloscope. The size of the measured laser power is the value of start DC test power.

In the test, the optical recording medium is determined to be optimized if the start DC test power is less than 2.5mW. In the test, the value of the start DC test power was shown the best in Test 5, second best in Test 6, and third best in Test 3.

As a determination standard of the test, mark stability is a standard to determine whether the recording mark 250 can be maintained for a long time without any change in time. The size of recording mark 250 should be maintained without growing bigger or smaller in time under effect of the laser beam of regenerative power or at room temperature when the recording mark 250 was formed to the optical recording medium by the laser pulse of 8T modulation.

In the test, the recording mark 250 in the recording layers was changed in Test 2, Test 3, Test 5, Test 6 and Test 8. Thus, the material of the recording layers 212, 214, 216 may be improved by material ratio of the recording layer 212, 214, 216 and structure of the optical recording medium.

According to the three test results, the combinations of Ag, In, Ge, Sb, Te, and Ag, In, Ge, Sb, Te, and Ag, Au, Cr, Mo as the first recording layer 212, the second recording layer 214 and the third recording layer 216, respectively, were evaluated as the best materials for the information recording layer 210. However, combination of most of the above materials has a little large start DC test power, and so they may be more desirable for the information recording layer 210 if there is a way to lower the recording laser power a little bit more.

Hereinafter, the combination of GeSbTe, Si and Ag was selected as main element of the first recording layer 212, the second recording layer 214 and the third recording layer 216 among the combinations of Ag, In, Ge, Sb, Te, and Ag, In, Ge, Sb, Te, and Ag, Au, Cr, Mo selected as proper materials through the above tests, and the test results to improve reflectivity and recording sensibility to the optical recording medium giving the above combination will be described in detail.

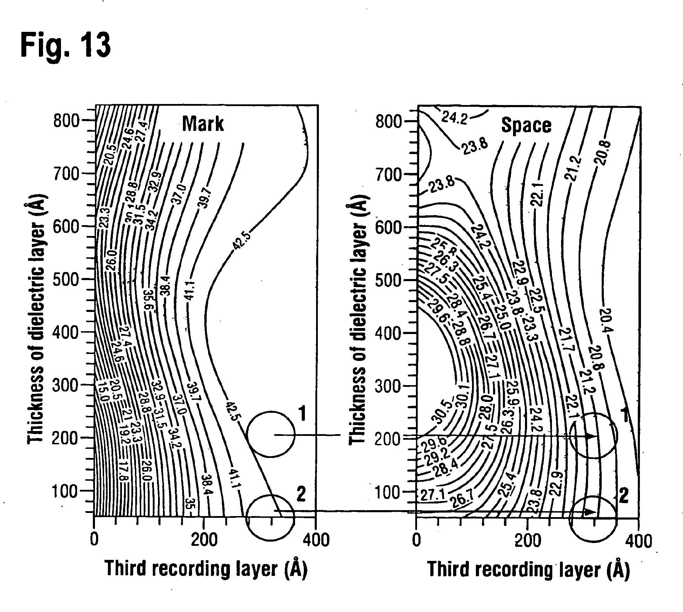

FIG. 13 is a view illustrating result of reflectivity change of the optical recording medium according to one embodiment of the present invention in case the combination of thickness of the third recording layer and the dielectric layer is changed.

In FIG. 13, the horizontal axis indicates the thickness of the third recording layer 216 as □ unit, the vertical axis indicates the thickness of the dielectric layer 260 as □ unit, and the value in FIG. 13 indicates reflectivity according to thickness of the third recording layer 216 and the dielectric layer 260.

The optical recording medium used in the above test designed HTL (High to Low) reflectivity, as can be seen by reflectivity difference in the part of mark and space.

The test was conducted for two cases that the dielectric layer 260 consisted of ZnS-Si02 (number two of FIG. 13) was not included when the third recording layer 216 is 300Å and that the dielectric layer 260 is laminated by the thickness of 200Å (number one of FIG. 13), to consider heat variation of the substrate 260 by selecting two areas of high contrast.

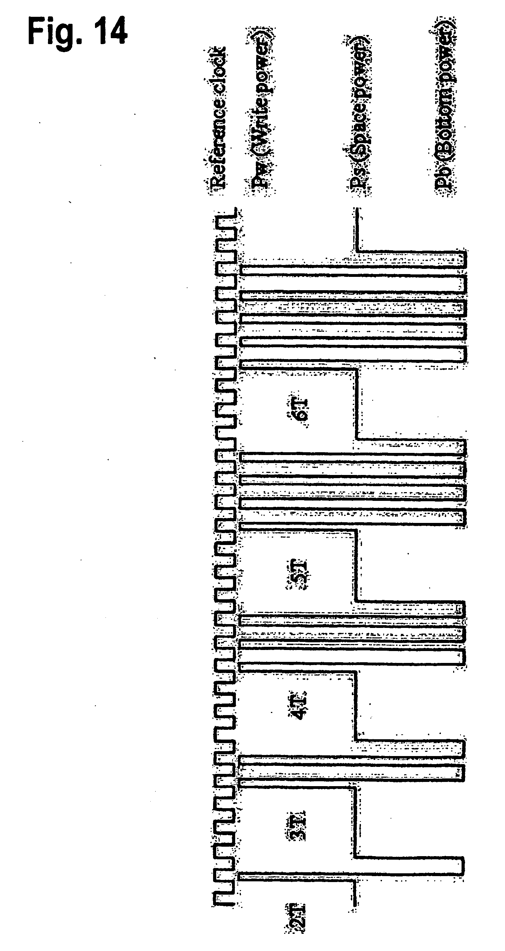

FIG. 14 is a view illustrating laser recording pulse waveform used for data recording of the optical recording medium for performance evaluation of the optical recording medium according to one embodiment of the present invention..

In FIG. 14, the recording power (Pw) of the laser pulse used for recording of the optical recording medium was 5.7mW, the space power (Ps) was 1.5mW, and the bottom power (Pb) was 0.1mW. The laser recording pulse has random multi pulse from 2T to 6T, and recording was done by modulating the pulse to make N-1 partition pulse to each recording pulse.

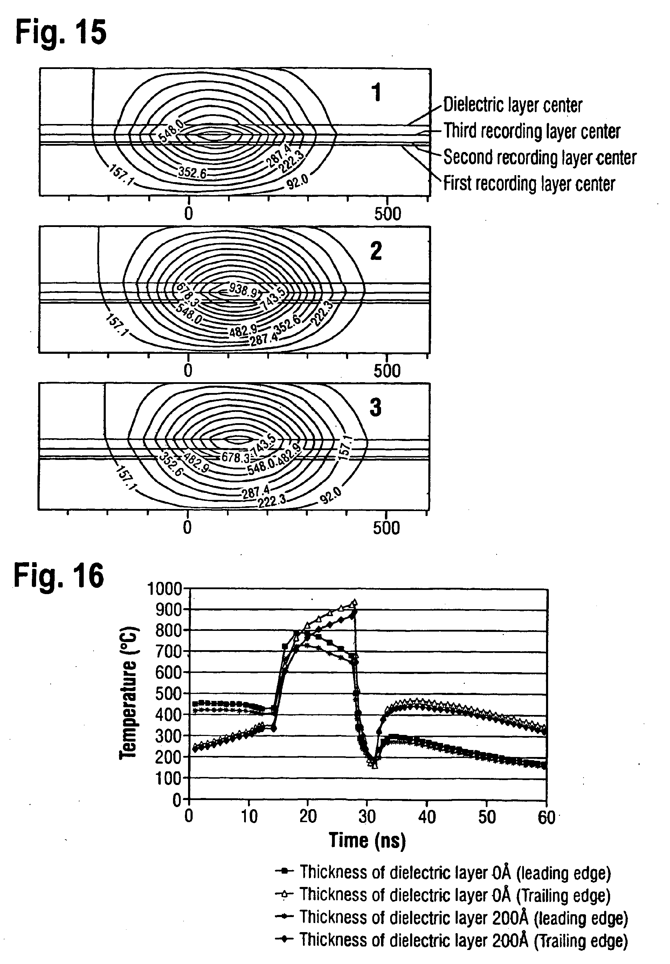

FIG. 15 is a view illustrating temperature distribution of the optical recording medium according to recording time in case of recording by the recording pulse of FIG. 14. And, FIG. 16 is a view illustrating temperature distribution depending on presence of the dielectric layer in the optical recording medium according to one embodiment of the present invention.

In FIG. 15, one, two and three figures indicate temperature distribution in vertical section of the track center of the optical recording medium at each time of one, two and three figures of FIG. 14.

The temperature distribution of FIG. 15 shows that the optical recording medium according to the present invention forms a middle form of temperature distribution of the optical recording mediums of two layers and five layers.

That is, in case the reflective layer and the dielectric layer do not exist like the optical recording medium of the present invention, satisfactory property can be achieved.

In FIG. 16, temperature distribution of the front edge and rear edge of 2T shown FIG. 14 is similar regardless of presence of the dielectric layer 260. Therefore, the dielectric layer 260 need not be laminated in the optical recording medium according to the present invention.

The superiority of performance of the optical recording medium according to the present invention is shown in a case that the information recording layer 100 is one (1). However, it is same when there are two or more information recording layers 100, 200. One or more information recording layers in two or more information recording layers 100, 200 may be combined by constitutional element, thickness ratio, sum of thickness, etc., as shown above.

From the preferred embodiments for the present invention, it is noted that modifications and variations can be made by a person skilled in the art in light of the above teachings. Therefore, it should be understood that changes may be made for a particular embodiment of the present invention within the scope of the present invention outlined by the appended claims.

## Claims

1. Use of a recordable optical recording medium, comprising:
a substrate (200), and
an information recording layer (210) located on the substrate,
wherein the information recording layer includes:
a first recording sub-layer (212) containing at least one element selected from the group consisting of Ag, In, Ge, Sb and Te;
a second recording sub-layer (214) containing at least one element selected from the group consisting of Si, Sn, Sb and Ge; and
a third recording sub-layer (216) containing at least one element selected form the group consisting of Ni, Ag, Au, W, Cr and Mo, the use of the recordable optical recording medium comprising a step of
recording information only once by a mechanism forming a new material in mixture having different reflectivity from its surrounding material through an irradiated laser beam in the information recording layer.

2. Use of claim 1, wherein a wavelength of the laser beam is 405nm.

3. Use of claim 1, wherein the first recording layer contains a compound in the form of A_{W}(Sb_{Z}Te_{1-Z})_{1-W}(0≤W≤0.2, 0.5≤Z≤0.9), wherein A is at least one element selected from the group consisting of Ge, Sn, Si, Cu, Au, Ag, Pd, V, Bi, Zr, Ti, Mn and Mo.

4. Use of claim 1, wherein the second recording layer is formed around the third recording layer.

5. Use of claim 3, wherein the second recording layer is formed around the third recording layer.

6. Use of claim 4, wherein the first recording layer is formed around the second recording layer or the third recording layer.

7. Use of claim 1, further including a dielectric layer (260) containing at least one element selected from the group of consisting of AlN, GeN, SiN, Al₂O₃, ZnS-SiO₂, TiO and SiO₂.

8. Use of claim 7, wherein the dielectric layer is formed on at least one side of the information recording layer.

9. Use of claim 7, wherein the dielectric layer is formed in the information recording layer.

10. Use of a recordable optical recording medium, comprising:
a sUbstrate (200);
at least two information recording layers (210, 230) located on the substrate, and
a separation layer (240) formed between the information recording layers, wherein each of the information recording layers include:
a first recording sub-layer (212, 232) containing at least one element selected from the group consisting of Ag, In, Ge, Sb and Te;
a second recording sub-layer (214, 234) containing at least one element selected from the group consisting of Si, Sn, Sb and Ge; and
a third recording sub-layer (216, 236) containing at least one element
selected form the group consisting of Ni, Ag, Au, W, Cr and Mo, the use of the recordable optical recording medium comprising a steps of recording information only once by a mechanism forming a new material in mixture having different reflectivity from its surrounding material through an irradiated laser beam in each information recording layer.

11. Use of claim 10, wherein a wavelength of the laser beam is 405nm.

12. Use of claim 10, wherein the first recording layer contains a compound in the form of A_{W}(Sb_{Z}Te_{1-Z})_{1-W}(0≤w≤0.2, 0.5≤Z≤0.9), wherein A is at least one element selected from the group consisting of Ge, Sn, Si, Cu, Au, Ag, Pd, V, Bi, Zr, Ti, Mn and Mo.

13. Use of claim 10, wherein the second recording layer is formed around the third recording layer in one of the information recording layers.

14. Use of claim 12, wherein the second recording layer is formed around the third recording layer in one of the information recording layers.

15. Use of claim 13, wherein the first recording layer is formed around the second recording layer or the third recording layer in one of the information recording layers.

16. Use of claim 10, further including a dielectric layer (260) containing at least one element selected from the group of consisting of AlN, GeN, SiN, Al₂O₃, ZnS-SiO₂, TiO and SiO₂.

17. Use of claim 16, wherein the dielectric layer is formed on at least one of the information recording layers.

18. Use of claim 16, wherein the dielectric layer is formed in at least one of the information recording layers.

## Patentansprüche

1. Verwendung eines aufzeichnungsfähigen optischen Aufzeichnungsmediums, umfassend
- ein Substrat (200) sowie
- eine auf dem Substrat befindliche Informationsaufzeichnungsschicht (210), wobei die Informationsaufzeichnungsschicht umfasst:
eine erste Aufzeichnungsteilschicht (212), welche mindestens ein Element enthält, das aus der Gruppe gewählt ist, die aus Ag, In, Ge, Sb und Te besteht,
eine zweite Aufzeichnungsteilschicht (214), welche mindestens ein Element enthält, das aus der Gruppe gewählt ist, die aus Si, Sn, Sb und Ge besteht, und
eine dritte Aufzeichnungsteilschicht (216), welche mindestens ein Element enthält, das aus der Gruppe gewählt ist, die aus Ni, Ag, Au, W, Cr und Mo besteht,
wobei die Verwendung des aufzeichnungsfähigen optischen Aufzeichnungsmediums einen Schritt zum lediglich einmaligen Aufzeichnen von Informationen mittels eines Mechanismus umfasst, der in der Informationsaufzeichnungsschicht durch einen eingestrahlten Laserstrahl eine neue Materialmischung mit anderem Reflektionsvermögen als das umgebende Material schafft.

2. Verwendung nach Anspruch 1, wobei eine Wellenlänge des Laserstrahls 405nm ist.

3. Verwendung nach Anspruch 1, wobei die erste Aufzeichnungsschicht eine Verbindung in Form von A_{W}(Sb_{Z}Te_{1-Z})_{1-W} (0≤W≤0,2; 0,5≤Z≤0,9) enthält, wobei A mindestens ein Element ist, das aus der Gruppe gewählt ist, die aus Ge, Sn, Si, Cu, Au, Ag, Pd, V, Bi, Zr, Ti, Mn und Mo besteht.

4. Verwendung nach Anspruch 1, wobei die zweite Aufzeichnungsschicht um die dritte Aufzeichnungsschicht herum gebildet ist.

5. Verwendung nach Anspruch 3, wobei die zweite Aufzeichnungsschicht um die dritte Aufzeichnungsschicht herum gebildet ist.

6. Verwendung nach Anspruch 4, wobei die erste Aufzeichnungsschicht um die zweite Aufzeichnungsschicht oder die dritte Aufzeichnungsschicht herum gebildet ist.

7. Verwendung nach Anspruch 1, ferner umfassend eine dielektrische Schicht (260), welche mindestens ein Element enthält, das aus der Gruppe gewählt ist, die aus AlN, GeN, SiN, Al₂O₃, ZnS-SiO₂, TiO und SiO₂ besteht.

8. Verwendung nach Anspruch 7, wobei die dielektrische Schicht auf mindestens einer Seite der Informationsaufzeichnungsschicht gebildet ist.

9. Verwendung nach Anspruch 7, wobei die dielektrische Schicht in der Informationsaufzeichnungsschicht gebildet ist.

10. Verwendung eines aufzeichnungsfähigen optischen Aufzeichnungsmediums, umfassend
- ein Substrat (200),
- mindestens zwei auf dem Substrat befindliche Informationsaufzeichnungsschichten (210, 230) und
- eine zwischen den Informationsaufzeichnungsschichten gebildete Trennschicht (240), wobei jede der Informationsaufzeichnungsschichten umfasst:
eine erste Aufzeichnungsteilschicht (212, 232), welche mindestens ein Element enthält, das aus der Gruppe gewählt ist, die aus Ag, In, Ge, Sb und Te besteht,
eine zweite Aufzeichnungsteilschicht (214, 234), welche mindestens ein Element enthält, das aus der Gruppe gewählt ist, die aus Si, Sn, Sb und Ge besteht, und
eine dritte Aufzeichnungsteilschicht (216, 236), welche mindestens ein Element enthält, das aus der Gruppe gewählt ist, die aus Ni, Ag, Au, W, Cr und Mo besteht,
wobei die Verwendung des aufzeichnungsfähigen optischen Aufzeichnungsmediums einen Schritt zum lediglich einmaligen Aufzeichnen von Informationen mittels eines Mechanismus umfasst, der in jeder Informationsaufzeichnungsschicht durch einen eingestrahlten Laserstrahl eine neue Materialmischung mit anderem Reflexionsvermögen als das umgebende Material schafft.

11. Verwendung nach Anspruch 10, wobei eine Wellenlänge des Laserstrahls 405nm ist.

12. Verwendung nach Anspruch 10, wobei die erste Aufzeichnungsschicht eine Verbindung in Form von A_{W}(Sb_{Z}Te_{1-Z})_{1-W} (0≤W≤0,2; 0,5≤Z≤0,9) enthält, wobei A mindestens ein Element ist, das aus der Gruppe gewählt ist, die aus Ge, Sn, Si, Cu, Au, Ag, Pd, V, Bi, Zr, Ti, Mn und Mo besteht.

13. Verwendung nach Anspruch 10, wobei in einer der Informationsaufzeichnungsschichten die zweite Aufzeichnungsschicht um die dritte Aufzeichnungsschicht herum gebildet ist.

14. Verwendung nach Anspruch 12, wobei in einer der Informationsaufzeichnungsschichten die zweite Aufzeichnungsschicht um die dritte Aufzeichnungsschicht herum gebildet ist.

15. Verwendung nach Anspruch 13, wobei in einer der Informationsaufzeichnungsschichten die erste Aufzeichnungsschicht um die zweite Aufzeichnungsschicht oder die dritte Aufzeichnungsschicht herum gebildet ist.

16. Verwendung nach Anspruch 10, ferner umfassend eine dielektrische Schicht (260), welche mindestens ein Element enthält, das aus der Gruppe gewählt ist, die aus AlN, GeN, SiN, Al₂O₃, ZnS-SiO₂, TiO und SiO₂ besteht.

17. Verwendung nach Anspruch 16, wobei die dielektrische Schicht auf mindestens einer der Informationsaufzeichnungsschichten gebildet ist.

18. Verwendung nach Anspruch 16, wobei die dielektrische Schicht in mindestens einer der Informationsaufzeichnungsschichten gebildet ist.

## Revendications

1. Utilisation d'un support d'enregistrement optique enregistrable, comprenant : un substrat (200) ; et
une couche d'enregistrement d'informations (210) placée sur le substrat, dans laquelle la couche d'enregistrement d'informations comprend :
une première sous-couche d'enregistrement (212) contenant au moins un élément sélectionné parmi le groupe composé de Ag, In, Ge, Sb et Te ;
une deuxième sous-couche d'enregistrement (214) contenant au moins un élément sélectionné parmi le groupe composé de Si, Sn, Sb et Ge ; et
une troisième sous-couche d'enregistrement (216) contenant au moins un élément sélectionné parmi le groupe composé de Ni, Ag, Au, W, Cr et Mo ;
l'utilisation du support d'enregistrement optique enregistrable comprenant une étape consistant à enregistrer des informations seulement une fois par un mécanisme formant un nouveau matériau en mélange ayant une réflectivité différente de celle du matériau l'entourant par l'intermédiaire d'un faisceau laser irradié dans la couche d'enregistrement d'informations.

2. Utilisation selon la revendication 1, dans laquelle une longueur d'onde du faisceau laser est de 405 nm.

3. Utilisation selon la revendication 1, dans laquelle la première couche d'enregistrement contient un composé sous la forme de A_{W}(Sb_{Z}Te_{1-Z})_{1-W}(0≤W≤0,2, 0,5≤Z≤0,9), dans laquelle A est au moins un élément sélectionné parmi le groupe composé de Ge, Sn, Si, Cu, Au, Ag, Pd, V, Bi, Zr, Ti, Mn et Mo.

4. Utilisation selon la revendication 1, dans laquelle la deuxième couche d'enregistrement est formée autour de la troisième couche d'enregistrement.

5. Utilisation selon la revendication 3, dans laquelle la deuxième couche d'enregistrement est formée autour de la troisième couche d'enregistrement.

6. Utilisation selon la revendication 4, dans laquelle la première couche d'enregistrement est formée autour de la deuxième couche d'enregistrement ou de la troisième couche d'enregistrement.

7. Utilisation selon la revendication 1, comprenant en outre une couche diélectrique (260) contenant au moins un élément sélectionné parmi le groupe composé de AlN, GeN, SiN, Al₂O₃, ZnS-SiO₂, TiO et SiO₂.

8. Utilisation selon la revendication 7, dans laquelle la couche diélectrique est formée sur au moins un côté de la couche d'enregistrement d'informations.

9. Utilisation selon la revendication 7, dans laquelle la couche diélectrique est formée dans la couche d'enregistrement d'informations.

10. Utilisation d'un support d'enregistrement optique enregistrable, comprenant :
un substrat (200) ;
au moins deux couches d'enregistrement d'informations (210, 230) placées sur le substrat, et
une couche de séparation (240) formée entre les couches d'enregistrement d'informations,
dans laquelle chacune des couches d'enregistrement d'informations comprend :
une première sous-couche d'enregistrement (212, 232) contenant au moins un élément sélectionné parmi le groupe composé de Ag, In, Ge, Sb et Te ;
une deuxième sous-couche d'enregistrement (214, 234) contenant au moins un élément sélectionné parmi le groupe composé de Si, Sn, Sb et Ge ; et
une troisième sous-couche d'enregistrement (216, 236) contenant au moins un élément sélectionné parmi le groupe composé de Ni, Ag, Au, W, Cr et Mo ; l'utilisation du support d'enregistrement optique enregistrable comprenant une étape consistant à enregistrer des informations seulement une fois par un mécanisme formant un nouveau matériau en mélange ayant une réflectivité différente de celle du matériau l'entourant par l'intermédiaire d'un faisceau laser irradié dans chaque couche d'enregistrement d'informations.

11. Utilisation selon la revendication 10, dans laquelle une longueur d'onde du faisceau laser est de 405 nm.

12. Utilisation selon la revendication 10, dans laquelle la première couche d'enregistrement contient un composé sous la forme de A_{W}(Sb_{Z}Te_{1-Z})_{1-W}(0≤W≤0,2, 0,5≤Z≤0,9), dans laquelle A est au moins un élément sélectionné parmi le groupe composé de Ge, Sn, Si, Cu, Au, Ag, Pd; V, Bi, Zr, Ti, Mn et Mo.

13. Utilisation selon la revendication 10, dans laquelle la deuxième couche d'enregistrement est formée autour de la troisième couche d'enregistrement dans l'une des couches d'enregistrement d'informations.

14. Utilisation selon la revendication 12, dans laquelle la deuxième couche d'enregistrement est formée autour de la troisième couche d'enregistrement dans l'une des couches d'enregistrement d'informations.

15. Utilisation selon la revendication 13, dans laquelle la première couche d'enregistrement est formée autour de la deuxième couche d'enregistrement ou de la troisième couche d'enregistrement dans l'une des couches d'enregistrement d'informations.

16. Utilisation selon la revendication 10, comprenant en outre une couche diélectrique (260) contenant au moins un élément sélectionné parmi le groupe composé de AlN, GeN, SiN, Al₂O₃, ZnS-SiO₂, TiO et SiO₂.

17. Utilisation selon la revendication 16, dans laquelle la couche diélectrique est formée sur au moins l'une des couches d'enregistrement d'informations.

18. Utilisation selon la revendication 16, dans laquelle la couche diélectrique est formée dans au moins l'une des couches d'enregistrement d'informations.
